**Europäisches Patentamt**

**European Patent Office**

**Office européen des brevets**

(19)

(11) Veröffentlichungsnummer: **0 210 162 B2**

(12) # NEUE EUROPÄISCHE PATENTSCHRIFT

(45) Veröffentlichungstag der neuen Patentschrift:
**21.08.91 Patentblatt 91/34**

(51) Int. Cl.⁵: **B65G 53/40, B65G 53/46**

(21) Anmeldenummer: **85900642.1**

(22) Anmeldetag: **21.01.85**

(86) Internationale Anmeldenummer:
**PCT/DE85/00016**

(87) Internationale Veröffentlichungsnummer:
**WO 86/04316 31.07.86 Gazette 86/17**

(54) VORRICHTUNG ZUM DOSIERTEN EINTRAGEN EINES STAUBES IN EINEN TRÄGERGASSTROM.

(43) Veröffentlichungstag der Anmeldung:
**04.02.87 Patentblatt 87/06**

(45) Bekanntmachung des Hinweises auf die
Patenterteilung:
**11.05.88 Patentblatt 88/19**

(45) Bekanntmachung des Hinweises auf die
Entscheidung über den Einspruch:
**21.08.91 Patentblatt 91/34**

(84) Benannte Vertragsstaaten:
**AT BE FR GB SE**

(56) Entgegenhaltungen:
**DE-A- 1 024 881**
**DE-A- 2 728 386**
**DE-A- 3 020 527**

(73) Patentinhaber: **Schoppe, Fritz, Dr.-Ing.**
**Gustav-Adolf-Strasse 5**
**W-8192 Geretsried 2 (DE)**

(72) Erfinder: **Schoppe, Fritz, Dr.-Ing.**
**Gustav-Adolf-Strasse 5 .**
**W-8192 Geretsried 2 (DE)**

(74) Vertreter: **Körner, Ekkehard, Dipl.-Ing.**
**Patentanwalt Maximilianstrasse 58**
**W-8000 München 22 (DE)**

EP 0 210 162 B2

## Beschreibung

Die Erfindung bezieht sich auf eine Vorrichtung zum dosierten Eintragen eines staubförmigen Stoffes in einen unter erhöhtem Druck stehenden Trägergasstrom, bestehend aus einem Behälter zur Aufnahme des Feststoffstaubes, einer Vorrichtung zum Versetzen des Feststoffstaubes in einen fliessfähigen Zustand, einer im Behälter in dem Feststoffstaub angeordneten, rotierend angetriebenen Scheibe und einer den Behälter durchquerenden, den Trägergasstrom führenden Rohrleitung, die im Bereich der Scheibe aufgetrennt ist und zwei Mündungen aufweist, die einen mit Durchgangslöchern versehenen Teilbereich der Scheibe sandwichartig zwischen sich einschliessen.

Eine solche Vorrichtung ist aus der DE-B-2 728 386 bekannt. Bei der dort dargestellten Vorrichtung ist die rotierende Scheibe im Verhältnis zu ihrem Durchmesser dünn. Sie ist in einem ziemlich weit aussen liegenden Ringbereich mit einem Kranz kleiner achsparalleler, kreiszylindrischer Durchgangslöcher versehen, deren Durchmesser jeweils etwa gleich oder etwas grösser als die Dikke der Scheibe ist. Bei der Rotation der Scheibe durch den fluidisierten Feststoffstaub füllen sich die Durchgangslöcher mit demselben. An wenigstens einer Stelle endet die in einem Teilbereich parallel zur Umlaufachse der Scheibe verlaufende Trägergasleitung auf der Scheibe, so dass der zugeführte Trägergasstrom den Feststoffstaub aus den von ihm erfassten Durchgangslöchern herausblasen kann. In Verlängerung der das Trägergas zuführenden Leitung befindet sich auf der anderen Seite der Scheibe eine Abführungsleitung, durch welche der Trägergasstrom und der von ihm aufgenommene staubförmige Feststoff abtransportiert werden. Beide Leitungen sind durch Gleitringdichtungen gegen die Scheibe abgedichtet.

Da der Durchmesser der Durchgangslöcher in der Scheibe im Vergleich zu dem Strömungsquerschnitt des Trägergases sehr klein ist und die Durchgangslöcher eng benachbart sind, ergibt sich mit dieser Vorrichtung eine pulsationsfreie Förderung. Als Nachteil zeigt sich jedoch, dass diese Vorrichtung nur bei kleinen Feststoffdurchsätzen anwendbar ist, jedoch keine grossen Durchsätze erlaubt. Zwar kann man zur Steigerung des Feststoffdurchsatzes die Drehzahl der Scheibe erhöhen. Ab einer gewissen Drehzahl wird jedoch die Füllung der einzelnen Durchgangslöcher nicht mehr vollständig, bis schliesslich eine noch weitere Steigerung der Drehzahl überhaupt keinen höheren Feststoffdurchsatz mehr erbringt. Ein vom Erfinder durchgeführter Versuch, durch eine Vergrösserung der Scheibendicke die Durchsatzleistung zu erhöhen, schlug fehl, weil, wie gefunden wurde, der staubförmige Feststoff nur mit einer begrenzten Geschwindigkeit in die einzelnen Durchgangslöcher eintritt und dieselben füllt.

Wenn man die Scheibendicke vergrössert, muss man daher entsprechend mit der Drehzahl der Scheibe zurückgehen, um noch eine hinreichende Füllung der Durchgangslöcher zu erreichen.

Der Erfindung liegt die Aufgabe zugrunde, eine Vorrichtung der vorbeschriebenen Art derart auszugestalten, dass bei Aufrechterhaltung eines pulsationsfreien Betriebes, bezogen auf denselben Ausblasequerschnitt, der Feststoffdurchsatz um ein Mehrfaches gesteigert ist.

Diese Aufgabe wird durch die Merkmale des Patentanspruchs 1 gelöst. Vorteilhafte Ausgestaltungen der Erfindung sind Gegenstand der Unteransprüche.

Im Vergleich zu der bekannten Vorrichtung befinden sich bei der erfindungsgemässen Vorrichtung nur wenige Durchgangslöcher der Scheibe im Ausblasequerschnitt, wobei dieser Querschnitt an jener Stelle definiert ist, den die Trägergasleitung an der Mündung im Bereich der Scheibe hat. Trotz der geringen Zahl von Durchgangslöchern, die sich im Ausblasequerschnitt befinden, wird ein pulsationsfreies Eintragen des Feststoffstaubes in den Trägergasstrom erreicht.

Die Erfindung nutzt die Erkenntnis aus, dass bei einer geeigneten Gestaltung der Durchgangslöcher das in das betreffende Loch einströmende Trägergas in dem Loch einen Wirbel hervorruft, sobald das Loch nur zu einem Bruchteil seines Querschnitts der Trägergasströmung ausgesetzt wird. Dieser Wirbel führt zu einem gleichmässigen Ausblasen des Loches, was bereits vollendet ist, wenn das Loch nur zu einem Drittel seines hydraulischen Querschnitts dem Ausblasequerschnitt ausgesetzt ist. Die erwähnte Wirbelbildung und zum Ausblasen geeignete Strömung lässt sich jedoch nur erreichen, wenn der Staudruck des Trägergases in den Durchgangslöchern einen bestimmten Mindestdruck aufweist.

Die Erfindung soll nachfolgend unter Bezugnahme auf die Zeichnungen an einem Ausführungsbeispiel näher erläutert werden. Es zeigt:

Fig. 1 eine Berichtsdarstellung einer für Kohlenstaub bestimmten Vorrichtung;

Fig. 2 eine Einzelheit der Vorrichtung nach Fig. 1 im Bereich der Scheibe;

Fig. 3 einen Dichtungsring in Aufsicht und in Schnitten;

Fig. 4 einen Ausschnitt aus einer Bohrschablone zur Herstellung der Scheibe.

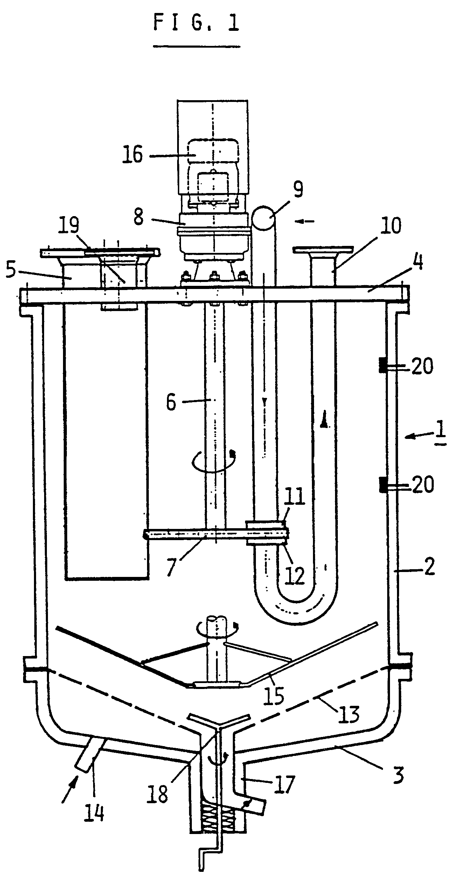

Die Vorrichtung nach Fig. 1 weist einen Behälter 1 auf, bestehend aus einem vorzugsweise zylindrischen, lotrecht stehenden Mantel 2 mit unten daran angesetztem Boden 3 und einem auf den Mantel aufgeschraubten Deckel 4. Durch den Deckel 4 erstreckt sich ein Einfüllrohr 5 zum Einfüllen von Kohlenstaub, das zu mehr als die Hälfte in den Behälter 1 eintaucht. Weiterhin erstreckt sich durch den Deckel 4 exzentrisch eine Welle 6 in den Behälter 1, die an ihrem unteren Ende eine Lochscheibe 7 trägt und die von einem am Deckel 4 befestigten Getriebemotor 8 angetrieben ist. Die Scheibe 7 befindet sich etwa in der Mine der Behälterhöhe oberhalb des unteren Endes des Einfüllrohres 5.

Durch den Deckel 4 verlaufen ausserdem zwei Rohre 9 und 10 einer Trägerluftleitung, die zu beiden Seiten der Scheibe 7 an einander gegenüberstehenden Gleitringen 11 und 12 enden.

Über dem Behälterboden 3 befindet sich im Abstand zu diesem ein mit Löchern versehener Fliessboden 13. In den Raum zwischen Fliessboden 13 und Behälterboden 3 mündet eine durch letzteren geführte Blasluftleitung 14. Über dem Fliessboden 13 ist in der Behälterachse ein Rührer 15 angeordnet, der über eine den Deckel 4 durchdringende Welle von einem Getriebemotor 16 antreibbar ist.

Der Boden 3 weist einen verschliessbaren Abzug 17 auf, durch welchen sich ein handbetätigtes Rührwerk 18 erstreckt. Mittels dieses Abzuges kann der Behälter 1 bei Betriebsunterbrechung entleert werden und können Verunreinigungen, die sich auf dem Fliessboden gesammelt haben, abgezogen werden.

Ein Luftabzug 19 im Deckel 4 dient dem Abzug der durch den Fliessboden 13 eingeblasenen sowie an der Scheibe 7 gegebenenfalls entweichenden Luft.

Niveausonden 20 am Behältermantel 2 dienen der Überwachung des Füllstandes des Behälters 1.

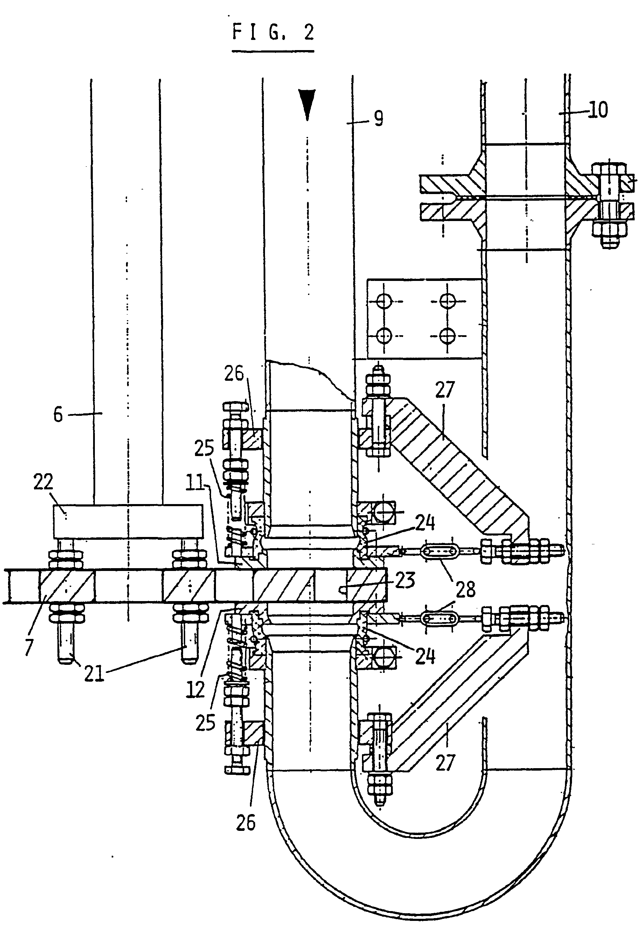

Fig. 2 zeigt die Einzelheit aus Fig. 1 an der rotierenden Scheibe 7. Die Scheibe 7 ist mit Schraubbolzen 21 im Abstand an einem Teller 22 befestigt, der seinerseits an der Welle 6 befestigt ist. Der Abstand zwischen dem Teller 22 und der Scheibe 7 stellt es im Zusammenwirken mit einer Vielzahl von Löchern, die auch in dem nicht von dem Ausblasequerschnitt erfassbaren Bereich in der Scheibe 7 ausgebildet sind, sicher, dass der lockere, fliessfähige Zustand des Kohlenstaubes von der Scheibe 7 so wenig wie möglich gestört wird.

Die Scheibe 7 ist mit einer Vielzahl von Durchgangslöchern 23 versehen, von denen sich in Fig. 2 eines im Bereich des Ausblasequerschnitts befindet. An der Scheibe 7 enden die Rohrleitungen 9 und 10, von welchen die Rohrleitung 9 der Zuführung des Trägergases und die Rohrleitung 10 der Abführung des mit Kohlenstaub durchsetzten Trägergases dient. Die Enden der Rohrleitungen 9 und 10 sind jeweils über elastische Manschetten 24 aus Gummi od. dgl. mit den Gleitringen 11, 12 verbunden, die einander gegenüberstehend zu beiden Seiten an der Scheibe 7 anliegen und diese an den Rohrleitungen 9, 10 abdichten. Die Gleitringe werden von Schraubenfedern 25 an die Scheibe 7 gedrückt, die sich jeweils an einem mit den zugehörigen Rohrleitungen 9, 10 verbundenen Flansch 26 abstützen. An den Flanschen 26 sind jeweils wenigstens drei sich bis etwa in die Ebene der Gleitringe 11, 12 erstreckende, schräg verlaufende Ausleger 27 befestigt, von denen in Fig.

2 jeweils einer dargestellt ist. Die Ausleger dienen der Verankerung beweglicher Halteglieder, im dargestellten Beispiel Ketten 28, deren andere Enden jeweils an den Gleitringen 11, 12 befestigt sind und die vom Umlauf der Scheibe 7 hervorgerufenen Reibungskräfte auf die Rohrleitungen 9, 10, die ausreichend steif sind, ableiten. Es versteht sich, dass die Verteilung der Ausleger so gewählt ist, dass in beiden Drehrichtungen der Scheibe die Reibungskräfte als Zugkräfte von den Ketten aufgenommen werden.

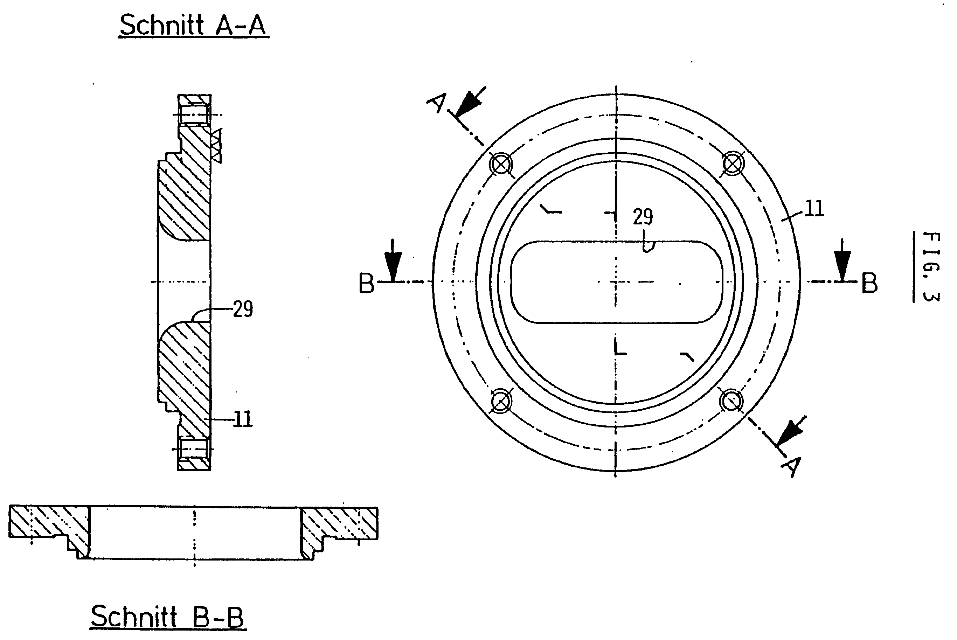

Fig. 3 zeigt den oberen Gleitring 11 in Draufsicht und in verschiedenen Schnitten. Wie ersichtlich, hat der Gleitring 11 eine Düsenöffnung 29 von im wesentlichen länglich rechteckigem Querschnitt. Auf der Trägergaseintrittsseite sind die Kanten der Düsenöffnung 29 verrundet, während sie auf der der Scheibe 7 zugewandten Seite scharfkantig sind.

Der Gleitring 11 ist in bezug auf die Scheibe 7 derart angeordnet, dass die Längsachse der Düsenöffnung 29 mit einem durch die Mitte der Düsenöffnung verlaufenden Radius einen Winkel von 15° einschliesst. Die Düsenöffnung steht somit im wesentlichen quer zur Bewegungsrichtung der Durchgangslöcher 23 der Scheibe.

Der gegenüberliegende, stromabwärts gelegene Gleitring 12 hat eine kreisrunde Öffnung zur Aufnahme des aus den Durchgangslöchern 23 ausgeblasenen Kohlenstaubes.

Wie beschrieben, wird an die Anordnung der Durchgangslöcher 23 in der Scheibe 7 eine ganz bestimmte Forderung gestellt, die sicherstellen soll, dass sich eine pulsationsfreie Zuführung des Kohlenstaubes in die Trägergasströmung ergibt.

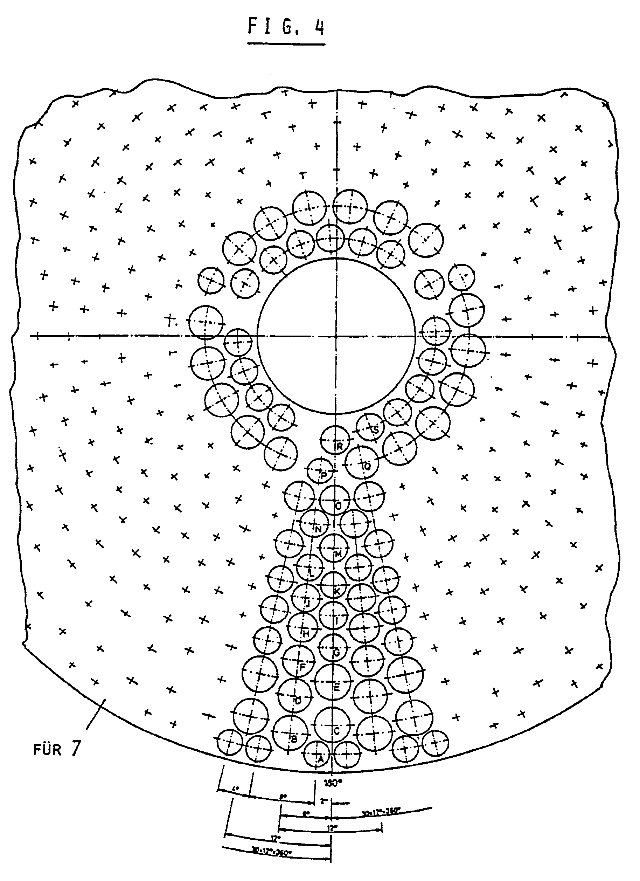

Fig. 4 zeigt eine Bohrschablone für die Herstellung einer im Zusammenwirken mit dem Düsenquerschnitt nach Fig. 3 brauchbaren Scheibe. Von den dargestellten Löchern können die mit B bis I bezeichneten Löcher in den Bereich der Düsenöffnung 29 des oberen Gleitrings 11 gelangen, die Löcher R dienen der Befestigung der Scheibe 7 an dem Teller 22, während die Löcher A und J bis Q und S sowie die Zentralöffnung nur zu dem Zweck vorgesehen sind, den fluidisierten Zustand des Kohlenstaubs nicht zu stören.

Wie aus Fig. 1 erkennbar ist, sind alle beschriebenen Elemente mit Ausnahme des Rührwerkzeugs 18 und der Sensoren 20 an dem Deckel 4 befestigt, so dass bei einer Betriebsstörung und zum Zwecke der Wartung und Reinigung das gesamte Aggregat durch Lösen des Deckels 4 vom übrigen Behälter 1 leicht zugänglich wird.

Im Betrieb wird über das Einfüllrohr 5 der Behälter 1 so weit mit Kohlenstaub gefüllt, dass der obere Sensor 20 ein entsprechendes Signal abgibt. Die Scheibe 7 ist dann vollständig in Kohlenstaub eingetaucht. Mit Hilfe von durch die Luftleitung 14 eingeleiteter Blasluft, die sich unter dem Fliessboden 13 gleichmässig verteilt und durch deren Löcher in den Kohlenstaub dringt und/oder mit Hilfe des Rührers 15 kann der im Behälter 1 befindliche Kohlenstaub in einen lockeren bis fluidisierten Zustand versetzt werden. Die durch die Luftleitung 14 eingeblasene Luft wird durch die Rohrleitung 19 aus dem Behälter 1 wieder abgeführt.

Der Kohlenstaub füllt die Löcher in der Scheibe 7. Durch die Rohrleitung 9 wird ein Trägergas auf die Scheibe 1 geblasen, das einen höheren Druck aufweist, als in dem Behälter 1 herrscht. Diese Trägergasströmung bläst den Kohlenstaub aus den Durchgangslöchern, die der Düsenöffnung 29 des Gleitringes 11 ausgesetzt sind, in den darunter liegenden Gleitring 12, von wo die nun den Kohlenstaub mitführende Trägergasströmung durch die Rohrleitung 10 nach aussen abgezogen wird.

Durch Rotation der Scheibe 7 werden immer wieder neue, mit Kohlenstaub gefüllte Durchgangslöcher 23 dem Blasquerschnitt zugeführt und leergeblasene Durchgangslöcher aus dem Blasquerschnitt entfernt.

Die Trägergasströmung ist derart eingestellt, dass sich in den Durchgangslöchern ein Staudruck von wenigstens 100 Pa, bevorzugt mehr als 140 Pa, einstellt. Mit diesem ergibt sich dann, sobald ein Teil eines Durchgangsloches der Trägergasströmung ausgesetzt wird, durch Strömungsabriss ein Wirbel in dem Durchgangsloch, der zu einer gleichmässigen Ausspülung desselben führt.

Versuche haben gezeigt, dass bei der erfindungsgemässen Vorrichtung über einen weiten Drehzahlbereich ein linearer Zusammenhang zwischen der in die Gasströmung eingetragenen Kohlenstaubmenge und der Drehzahl der Scheibe gegeben ist. Auch die erfindungsgemässe Vorrichtung zeigt, dass ab einer bestimmten oberen Drehzahl eine lineare Zunahme des Kohlenstaubeintrags mit der Drehzahl nicht mehr existiert, dass jedoch bei dieser Drehzahl das Förderungsvermögen der erfindungsgemässen Vorrichtung bei sonst vergleichbaren Verhältnissen etwa dreimal so gross ist wie das der bekannten Vorrichtung.

Versuche haben erwiesen, dass mit der genannten oberen Drehzahl als Obergrenze in einem sich wie 1 :50 verhaltenden Drehzahlbereich ein pulsationsfreier Betrieb der Vorrichtung bei linearem Zusammenhang zwischen Drehzahl und eingetragener Kohlenstaubmenge möglich ist.

Sinkt der Kohlenstaubpegel im Behälter 1 unter das Niveau des unteren Sensors 20 ab, wird ein entsprechendes Signal ausgelöst, das für eine entsprechende Nachfüllung sorgt. Die Schaltungsmassnahmen hierfür sind nicht dargestellt. Der untere Sensor 20 ist ausreichend hoch angeordnet, dass auch bei unterem Füllstand des Behälters 1 ausgeschlossen ist, dass die Scheibe 7 nicht in den Kohlenstaub eingetaucht ist, quasi « trocken » läuft.

Durch die erfindungsgemässe Anordnung von nur wenigen grossen Durchgangslöchern 23 innerhalb des Ausblasequerschnitts 29 der Trägergasleitung wird erreicht, dass diese im Verhältnis zur Trägergasleitung und zur Scheibendicke nicht mehr klein sind, sondern von vergleichbarer Grössenordnung. Infolge des grossen Querschnitts füllen sich die Durchgangslöcher 23 sehr schnell mit Kohlenstaub, weshalb grosse Scheibendicken und hohe Scheibendrehzahlen verwendet werden können, ohne dass die Füllung der Durchgangslöcher 23 nachlässt. Somit können sehr grosse Förderleistungen bis zu ca. 20 to/h Kohlenstaub bei einem Blasquerschnitt am oberen Gleitring 11 von etwa 15 cm² erreicht werden. Andererseits erlaubt die Erfindung, wie erwähnt, sehr kleine Drehzahlen und damit sehr kleine Förderleistungen, da die Entleerung jedes Durchgangsloches 23 eine bestimmte, wenn auch kurze Zeit dauert. Erst nach Verstreichen dieser Zeit muss das nächste Durchgangsloch 23 dem Ausblasequerschnitt 29 ausgesetzt werden. Die hieraus resultierende Mindestdrehzahl liegt in der Grössenordnung von einer Umdrehung pro Minute, so dass man bei den beschriebenen Abmessungen Förderleistungen bis herunter zu etwa 10 kg/h Kohlenstaub erreichen kann. Der Arbeitsbereich dieser Dosiereinrichtung nach oben und unten ist daher überraschend gross. Dies wiederum ist die Voraussetzung dafür, dass die durch diesen Kohlenstaub gespeisten Kohlenstaubbrenner einen so grossen Regelbereich erhalten, wie dies bisher noch nicht bekannt war. Üblicherweise wird ein Regelbereich von 1 :3 bis 1 :5 schon als sehr gut angesehen. Mit der erfindungsgemässen Vorrichtung können Regelbereiche des Brenners von 1 :40 bis 1 :50 erreicht werden. Dies wiederum ist eine Voraussetzung für die elastische Anpassung der Feuerungsleistung an den Verbrauch und damit für eine deutliche Senkung des Kohlenstaubverbrauches. Messungen haben ergeben, dass allein auf Grund des vergrösserten Regelbereiches der Wärmeverbrauch einer Feuerung im Jahresdurchschnitt um ca. 4% verringert werden konnte.

Im vorbeschriebenen Beispiel sind die Durchgangslöcher 23 als kreiszylindrische Bohrungen dargestellt, denn sie können eine beliebige Gestalt haben, beispielsweise die von Schlitzen, welche ebenfalls beliebig, beispielsweise radial, angeordnet sein können.

Auch ist es nicht erfindungswesentlich, die Trägergasleitung 9 von oben zur Scheibe 7 hinzuführen und die aufnehmende Leitung 10 nach unten fortzuführen. Vielmehr können die Strömungsrichtungen beider Leitungen auch vertauscht werden, beispielsweise dann, wenn in dem unteren Krümmer der Rohrleitung 10 sonst grösserer Verschleiss, etwa durch besonders abrasiven Staub, zu befürchten ist.

Weiterhin ist die Anordnung der Welle 6 in der in Fig. 1 dargestellten lotrechten Anordnung nicht erfindungswesentlich ; hierdurch wird lediglich eine einfache Abdichtung der Durchführungen der Wellen durch den Deckel 4 oder andere Wandungen des Behälters 1 erreicht, weil hierdurch diese Durchführungen ausserhalb des Kohlenstaubniveaus liegen. Es können die Wellen an jedem beliebigen Ort durch die Wandungen des Behälters 1 hindurchgeführt werden und jede beliebige Richtung einnehmen.

Wenn der Querschnitt der Durchgangslöcher 7 nicht kreiszylindrisch ist, sondern eine andere Gestalt hat, etwa die eines Schlitzes, gilt als Durchmesser nach den bekannten Regeln der Strömungslehre der hydraulische Durchmesser des Querschnitts der Löcher.

Auch müssen die Durchgangslöcher nicht genau achsparallel angeordnet sein. Je nach Korngrösse und Eigenschaften des zu fördernden Staubes können die Löcher 23 auch schräg zu der Achse angeordnet sein, um die die Scheibe 7 rotiert.

Es sei schliesslich erwähnt, dass - soweit es der Platz zulässt - in einem Behälter gegebenenfalls auch mehrere Dosiereinheiten, bestehend aus Scheibe und Rohrleitungssystem, angeordnet sein können.

**Patentansprüche**

1. Vorrichtung zum dosierten Eintragen eines staubförmigen Stoffes in einen unter erhöhtem Druck stehenden Trägergasstrom, bestehend aus einem Behälter (1) zur Aufnahme des Feststoffstaubes, einer Vorrichtung (13, 14) zum Versetzen des Staubes in einen fliessfähigen Zustand, einer im Behälter (1) in dem Staub angeordneten, rotierend angetriebenen Scheibe (7) und einer den Behälter (1) durchquerenden, den Trägergasstrom führenden Rohrleitung (9, 10), die im Bereich der Scheibe (7) aufgetrennt ist und zwei Mündungen aufweist, die einen mit Durchgangslöchern (23) versehenen Teilbereich der Scheibe (7) sandwichartig zwischen sich einschliessen, wobei der Trägergasstrom so eingestellt ist, dass in den ihm ausgesetzten Durchgangslöchern (23) der Scheibe (7) ein Staudruck von wenigstens 100 Pa, bevorzugt wenigstens 140 Pa, vorhanden ist, das Verhältnis von Länge zu hydraulischem Durchmesser der Durchgangslöcher (23) kleiner als 5, bevorzugt kleiner als 2,5, ist, die Grössenverhältnisse von Durchgangslöchern (23) und Mündungsquerschnitt (29) der Rohrleitung (9, 10) sowie die Anordnung der Durchgangslöcher (23) derart gewählt sind, dass sich nur etwa 4 bis 8 Durchgangslöcher (23) gleichzeitig im Mündungsquerschnitt (29) befinden und ein Durchgangsloch (23) in den Mündungsquerschnitt (29) eintritt, wenn ein unmittelbar vorausgehendes Durchgangsloch (23) sich bereits zu etwa einem Drittel seines Querschnitts im Mündungsquerschnitt (29) befindet, und der Druck in der Rohrleitung (9,10) gegenüber demjenigen im Behälter (1) erhöht ist.

2. Vorrichtung nach Anspruch 1, dadurch gekennzeichnet, dass die Durchgangslöcher (23) in der Scheibe (7) als kreiszylindrische Bohrungen ausgeführt sind.

3. Vorrichtung nach Anspruch 1, dadurch gekennzeichnet, dass die Durchgangslöcher als Schlitze ausgeführt sind.

4. Vorrichtung nach Anspruch 3, dadurch gekennzeichnet, dass die Schlitze in der Scheibe radial angeordnet sind.

5. Vorrichtung nach Anspruch 3, dadurch gekennzeichnet, dass die Schlitze in der Scheibe unter einem Winkel zum Radius der Scheibe angeordnet sind.

6. Vorrichtung nach einem der vorhergehenden Ansprüche, dadurch gekennzeichnet, dass die Rohrleitung (9, 10) an der Trennstelle an der Scheibe (7) jeweils in Gleitringen (11, 12) endet, die über elastische Manschetten (24) mit der Rohrleitung (9, 10) verbunden sind und federnd gegen die Scheibe (7) gedrückt sind.

7. Vorrichtung nach Anspruch 6, dadurch gekennzeichnet, dass die Reibungskräfte zwischen der Scheibe (7) und den Gleitringen (11, 12) durch bewegliche Glieder (28), vorzugsweise Ketten, abgeleitet sind.

8. Vorrichtung nach einem der vorhergehenden Ansprüche, dadurch gekennzeichnet, dass sich im Behälter (1) eine mechanisch arbeitende, in den Feststoffstaub eintauchende Homogenisierungsvorrichtung, insbesondere ein Rührer (15), befindet.

9. Vorrichtung nach einem der vorhergehenden Ansprüche, dadurch gekennzeichnet, dass sich im Boden (2) des Behälters (1) ein Abzug (17) befindet und dass Abzugshilfen (18) vorgesehen sind, um den Feststoffstaub durch diesen Abzug (17) zu entleeren.

10. Vorrichtung nach Anspruch 9, dadurch gekennzeichnet, dass die Abzugshilfe ein handbetätigtes Rührwerk (18) ist.

**Claims**

1. Device for introducing a dosed quantity of a dustlike substance into a carrier gas stream being under increased pressure, comprising a reservoir (1) for receiving the solid dust, an apparatus (13, 14) for converting the dust to a flowable state, a rotatingly driven disc (7) disposed in the dust within said reservoir (1), and a tube line (9, 10) traversing said reservoir (1) and conveying the carrier gas stream, said tube line (9, 10) being severed in the region of the disc (7) and including two openings enclosing therebetween, in sandwiched fashion, a partial area of the disc (7) provided with passage holes (23), wherein the carrier gas stream is so adjusted that a stagnation pressure of at least 100 Pa, preferably at least 140 Pa, is present in the passage holes (23) of the disc (7) exposed to the carrier gas stream, the ratio that the length bears to the hydraulic diameter of the holes (23) is smaller than 5, preferably smaller than 2.5, the ratios of dimensions of the disc holes (23) and of the opening area (29) of the tube line (9, 10) as well as the arrangement of the disc holes (23) are so selected that only approximately 4 to 8 holes (23) are located within the opening area (29) at the same time and a hole (23) enters said opening area (29) when almost one-third of the cross-section of a directly preceding hole (23) is already located in the opening area (29), and the pressure within said tube line (9,10) is increased with respect to that in the reservoir (1).

2. Device according to claim 1, characterized in that said holes (23) in the disc (7) are formed as circular cylindrical bores.

3. Device according to claim 2, characterized in that the holes are formed as slots.

4. Device according to claim 3, characterized in that the slots are radially disposed in said disc.

5. Device according to claim 3, characterized in that the slots define an angle with respect to the radius of said disc.

6. Device according to any one of the preceding claims, characterized in that the tube line (9, 10) terminates at the point of separation at the disc (7) in sliding rings (11, 12), respectively connected with said tube line (9, 10) via resilient collars (24) and being resiliently pressed against said disc (7).

7. Device according to claim 6, characterized in that the frictional forces between said disc (7) and said sliding rings (11, 12) are diverted by movable elements (28), preferably chains.

8. Device according to any one of the preceding claims, characterized in that a mechanically operating homogenization means, in particular a stirrer (15), immersing in the solid dust, is disposed in said reservoir (1).

9. Device according to any one of the preceding claims, characterized in that a discharge (17) is located in the reservoir bottom (2) and discharge aids (18) are provided to remove the solid dust through said discharge (17).

10. Device according to claim 9, characterized in that said discharge aid is a manually operated agitator (18).

**Revendications**

1. Dispositif permettant d'introduire, de manière dosée, une substance pulvérulente dans un courant de véhicule gazeux se trouvant sous pression élevée, comprenant une enceinte (1) destinée à recevoir la poussière de matière solide, un dispositif (13, 14) permettant de faire passer cette poussière dans un état fluide, un disque (7) disposé dans l'enceinte (1), dans la poussière, et entraîné en rotation, et une tuyauterie (9, 10) qui traverse l'enceinte (1) et guide le courant de véhicule gazeux et qui est interrompue dans la zone du disque (7) et comporte deux embouchures qui enferment entre elles, en sandwich, une zone partielle du disque (7) pourvue de trous de passage (23), dispositif dans lequel le courant de véhicule gazeux est réglé d'une façon telle qu'il existe dans les trous de passage (23) du disque (7) qui sont exposés à ce courant une pression dynamique d'au moins 100 Pa, de préférence au moins 140 Pa, le rapport de la longueur au diamètre hydraulique des trous de passage (23) est inférieur à 5, de préférence inférieur à 2,5, les rapports des dimensions des trous de passage (23) et de la section de débouché (29) de la tuyauterie (9, 10), ainsi que l'agencement des trous de passage (23), sont choisis de façon telle qu'il ne se trouve simultanément qu'environ 4 à 8 trous de passage (23) dans la section de débouché (29) et qu'un trou de passage (23) pénètre dans la section de débouché (29) lorsqu'un trou de passage (23) le précédant directement se trouve déjà pour environ 1/3 de sa section dans cette section de débouché (29), et la pression dans la tuyauterie (9,10) est superieure à celle dans l'enceinte (1).

2. Dispositif suivant la revendication 1, caractérisé en ce que les trous de passage (23) prévus dans le disque (7) sont formés de perçages cylindriques à section circulaire.

3. Dispositif suivant la revendication 1, caractérisé en ce que les trous de passage sont réalisés sous forme de fentes.

4. Dispositif suivant la revendication 3, caractérisé en ce que les fentes sont disposées radialement dans le disque.

5. Dispositif suivant la revendication 3, caractérisé en ce que les fentes sont disposées dans le disque sous un certain angle par rapport au rayon de ce disque.

6. Dispositif suivant l'une quelconque des revendications précédentes, caractérisé en ce que la tuyauterie (9, 10) se termine dans chaque cas, à l'emplacement d'interruption à l'endroit du disque (7), par des anneaux glissants (11, 12) qui sont reliés à cette tuyauterie (9, 10) par l'intermédiaire de manchons élastiques (24) et sont appuyés élastiquement contre le disque (7).

7. Dispositif suivant la revendication 6, caractérisé en ce que les efforts de frottement entre le disque (7) et les anneaux glissants (11, 12) sont détournés à l'aide d'organes mobiles (28), de préférence des chaînes.

8. Dispositif suivant l'une des revendications précédentes, caractérisé en ce qu'il se trouve dans l'enceinte (1) un dispositif d'homogénéisation travaillant par voie mécanique et plongé dans la poussière de matière solide, en particulier un agitateur (15).

9. Dispositif suivant l'une des revendications précédentes, caractérisé en ce qu'il se trouve dans le fond (2) de l'enceinte (1) une évacuation (17) et en ce qu'il est prévu des auxiliaires d'évacuation (18) afin de vider la poudre de matière solide par l'intermédiaire de cette évacuation (17).

10. Dispositif suivant la revendication 9, caractérisé en ce que l'auxiliaire d'évacuation est un agitateur (18) manoeuvré à la main.

# F I G. 1

# F I G. 2

FIG. 3

Schnitt A-A

Schnitt B-B

# F I G. 4

FÜR 7